# FASCICULE DE BREVET EUROPEEN

(11) **EP 4 103 431 B1**
(45) Date de publication et mention de la délivrance du brevet: **28.08.2024**
(21) Numéro de dépôt: 21708722.0
(22) Date de dépôt: 08.02.2021
(51) Int. Cl.: B60R 11/02, H04R 1/02

(54) **SUPPORT POUR AU MOINS UN HAUT-PARLEUR LATÉRAL ARRIÈRE DE VÉHICULE**
HALTERUNG FÜR MINDESTENS EINEN FAHRZEUGRÜCKSEITENLAUTSPRECHER
SUPPORT FOR AT LEAST ONE VEHICLE REAR SIDE SPEAKER

(30) Priorité: 12.02.2020 FR 2001382
(43) Date de publication de la demande: 21.12.2022
(73) Titulaire: Stellantis Auto SAS, 78300 Poissy (FR)
(72) Inventeur: RONGET, Christophe, 70400 TAVEY (FR); THIEBAULT, Ludovic, 70400 COUTHENANS (FR)
(86) Numéro de dépôt international: PCT/FR2021/050224
(87) Numéro de publication internationale: WO 2021/160958

(56) Documents cités:
- EP-A1- 1 473 963
- EP-B1- 1 473 963
- CN-A- 110 271 495
- FR-A1- 3 083 168
- JP-A- 2002 281 581

## Description

### [Domaine technique]

La présente invention concerne d'une manière générale le domaine de la sonorisation de l'habitacle des véhicules automobiles. Elle vise en particulier un ensemble comportant un support pour au moins un haut-parleur latéral arrière de véhicule automobile et une doublure latérale de custode dudit véhicule.

### [Technique antérieure]

Les systèmes de sonorisation de l'habitacle d'un véhicule automobile comportent généralement :
- une paire de haut-parleurs à large bande de type woofer/medium restituant les fréquences intermédiaires et basses (c'est-à-dire les fréquences situées entre environ 100 et 5000 Hz), ces derniers étant implantés traditionnellement dans les parties inférieures des portières avant gauche et avant droite, et
- une paire de haut-parleurs de type tweeter restituant les hautes fréquences (c'est-à-dire les fréquences supérieures à 5000 Hz) et implantés généralement sur la planche de bord à proximité de ses deux extrémités latérales.

Afin d'assurer une meilleure qualité de restitution sonore dans l'habitacle, les véhicules automobiles ont tendance à être équipés de systèmes de sonorisation plus performants dotés également d'au moins une paire de haut-parleurs à large bande de type woofer/medium implantés dans la partie arrière de l'habitacle sous les garnitures de custode gauche et droite.

Le montage de ces haut-parleurs latéraux arrière est classiquement réalisé par l'intermédiaire de supports en matière plastique fixés contre la face interne des doublures latérales de custode du véhicule.

Chacun de ces supports comprend des moyens d'accueil pour au moins un haut-parleur ainsi que des moyens de fixation à la doublure de custode.

Le montage du support portant au moins un haut-parleur préalablement mis en place sur ce dernier, est effectué manuellement par encliquetage de ce support sur la doublure de custode correspondante suivant une direction sensiblement transversale.

Cette opération d'encliquetage est réalisée par l'opérateur depuis l'extérieur du véhicule au travers de l'ouverture de volet arrière du véhicule ce qui lui permet de bénéficier d'une vue dégagée sur la zone de montage et de repérer aisément le positionnement des orifices d'encliquetage ménagés dans la doublure de custode.

Malheureusement, certains types de véhicule présentant un profil d'ouverture de volet arrière très incliné (en particulier ceux de type coupé) ne permettent pas aux opérateurs d'atteindre les zones de montage de ces sous-ensembles au travers de cette ouverture (la distance entre le pare-choc arrière de ce véhicule contre lequel se tient l'opérateur et ces zones latérales de montage étant supérieure à la longueur de ses bras).

Dans ces cas de figure, l'opération d'encliquetage d'un tel support doit alors être effectuée par l'opérateur au travers de l'ouverture latérale de portière la plus proche, ce qui s'avère nettement plus fastidieux du fait de la mauvaise visibilité de la zone de montage et en particulier des orifices d'encliquetage ménagés dans la doublure de custode.

En outre, ce manque de visibilité peut entrainer un pinçage des tuyaux et/ou faisceaux électriques présents dans cette zone de montage lors de l'encliquetage du support. Le document FR3083168 montre un ensemble comportant un support pour au moins un haut-parleur latéral de véhicule automobile et une doublure latérale dudit véhicule

### [Exposé de l'invention]

La présente invention vise donc à améliorer la situation.

Elle propose à cet effet un un ensemble comportant un support pour au moins un haut-parleur latéral arrière de véhicule automobile et une doublure latérale de custode dudit véhicule selon la revendication 1.

Ces moyens de fixation que comportent l'ensemble selon l'invention permettent de faciliter grandement son montage manuel par un opérateur au travers de l'ouverture latérale de portière la plus proche de la doublure latérale de custode du véhicule, tout en limitant le risque de pincement des faisceaux et tuyaux présents dans la zone de montage.

Selon des caractéristiques préférées dudit ensemble selon l'invention :
- ledit support comporte un corps creux formant une cuvette ainsi qu'une platine prévue pour être rapportée fixement sur ledit corps creux de sorte à fermer ladite cuvette pour former une chambre acoustique de résonnance, ladite platine présentant une première ouverture d'accueil pour un premier dit haut-parleur, cette première ouverture étant agencée de sorte à déboucher dans ladite cuvette après la mise en place de ladite platine sur ledit corps creux ;
- ladite cuvette est délimitée par une paroi de fond destinée à reposer contre la face interne de la doublure de custode, une enveloppe latérale d'axe sensiblement transversal, ainsi qu'une collerette périphérique saillant radialement vers l'extérieur depuis le bord de l'enveloppe de fond opposé à la paroi de et sur laquelle repose ladite platine après sa mise en place sur ledit corps creux ;
- lesdits moyens de fixation comportent deux dits crochets s'étendant depuis la paroi de fond de ladite cuvette, chaque dit crochet comprenant une embase saillant transversalement depuis la face externe de la portion avant de ladite paroi de fond, ainsi qu'une jambe s'étendant longitudinalement vers l'arrière depuis l'extrémité de ladite embase opposée à cette paroi de fond et destinée à venir reposer en appui contre la face externe de ladite doublure de custode sur le pourtour d'un dit orifice correspondant ;
- ladite enveloppe latérale présente un orifice sur lequel est monté un passe-gaine en élastomère destiné à être traversé de manière étanche par le câble électrique d'alimentation dudit premier haut-parleur ;
- ledit support comporte un joint d'étanchéité rapporté par collage le long de la face interne de ladite collerette périphérique de la cuvette, de sorte à assurer l'étanchéité acoustique de ladite chambre de résonnance après la mise en place de ladite platine sur ledit corps creux ;
- ledit corps creux comporte une extension sensiblement plane et s'étendant dans le prolongement d'une portion de la collerette périphérique de la cuvette, ladite platine comprenant également une partie destinée à recouvrir ladite extension et présentant une seconde ouverture d'accueil pour un second haut-parleur de type tweeter, cette seconde ouverture étant agencée de sorte à venir en superposition avec une troisième ouverture pratiquée dans ladite extension après la mise en place de ladite platine sur ledit corps creux ;
- ledit corps creux comporte un jambage s'étendant sensiblement transversalement du côté externe depuis le bord inférieur de ladite extension et se terminant par un pied destiné à reposer contre la face interne de ladite doublure de custode et sur lequel est ménagé le au moins dit organe de clippage ;
- lesdits moyens de fixation comportent également un orifice de vissage ménagé dans ledit pied et agencé pour se superposer avec un orifice correspondant ménagé dans ladite doublure de custode ; et/ou
- ladite platine présente, dans sa partie destinée à reposer contre ladite extension du corps creux, une première fenêtre agencée de manière à se superposer avec une seconde fenêtre pratiquée dans cette extension après la mise en place de ladite platine sur ledit corps creux, de sorte à permettre la fixation par encliquetage d'une garniture de custode sur le support.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue prise depuis l'intérieur de l'habitacle de la zone latérale supérieure droite de custode de la structure de caisse d'un véhicule automobile sur laquelle est monté un support pour haut-parleur selon l'invention portant un haut-parleur à large bande de type woofer/medium et un tweeter ;
[Fig 2] est une vue en perspective du support pour haut-parleur de la figure 1 ;
[Fig 3] montre la zone latérale supérieure de custode de la figure 1 avant le montage du support telle que visible par un opérateur ayant introduit sa tête au travers de l'ouverture latérale de portière s'étendant à l'avant de cette zone ;
[Fig 4] est une vue semblable à la figure 3 mais prise après le montage du support pour haut-parleur ; et
[Fig 5] représente une vue de la face externe de la doublure latérale de custode après la mise en place du support.

### [Description détaillée]

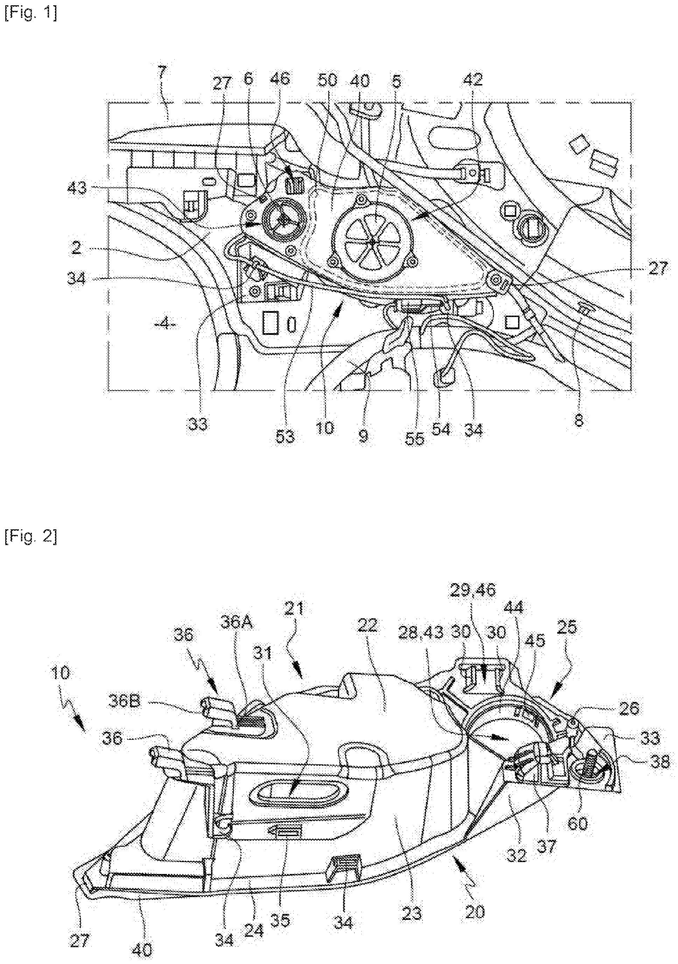

La figure 1 représente une vue en élévation de la zone latérale supérieure de custode de la structure de caisse d'un véhicule automobile comportant une doublure de custode 2 s'étendant d'arrière en avant entre une ouverture de volet arrière 3 et une ouverture latérale arrière de portière 4, et sur laquelle est monté un support de haut-parleurs 10 selon l'invention portant un premier haut-parleur à large bande de type woofer/medium 5 et un tweeter 6.

On peut en outre observer qu'un coussin gonflable de sécurité de type rideau 7, un tuyau souple 8 d'alimentation en liquide de rinçage du gicleur de lunette arrière (non visible) ainsi qu'un faisceau d'alimentation électrique 9 sont également rapportés sur cette zone latérale supérieure de custode de la structure de caisse.

Cette doublure de custode 2 est destinée à être recouverte par une garniture de custode non représentée sur les figures.

Dans la description qui va suivre et par convention, les termes « inférieur », « supérieur », « longitudinal » « latéral » et « transversal » seront définis par rapport à la position de montage du support 10 dans le véhicule.

Les termes « externe » et « interne » seront quant à eux utilisés pour définir la position relative d'un élément par référence au plan longitudinal médian du véhicule. L'élément le plus proche de ce plan sera ainsi qualifié d'interne par opposition à l'autre élément plus éloigné de ce même plan qui sera quant à lui qualifié d'externe.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement horizontal » indiquera qu'un écart de l'ordre de 15° par rapport à une orientation strictement horizontale est admis dans le cadre de l'invention.

Le support 10, montré seul sur la figure 2, comporte un corps creux 20 ainsi qu'une platine d'accueil 40 pour les haut-parleurs 5 et 6 prévue pour être rapportée fixement sur le corps 20 en le recouvrant, ces deux éléments étant venus chacun de moulage d'une seule pièce à partir d'un polymère thermoplastique tel que le polypropylène, le polyamide ou l'ABS (Acrylonitrile Butadiène Styrène).

Le corps creux 20 comporte une cuvette 21 présentant une section en forme de goutte d'eau dont la pointe est orientée vers l'arrière, cette cuvette étant délimitée par une paroi de fond 22 destinée à reposer contre la face interne de la doublure de custode 2, une enveloppe latérale d'axe sensiblement transversal 23, ainsi qu'une collerette périphérique 24 saillant radialement vers l'extérieur depuis le bord de l'enveloppe opposé à la paroi de fond 22 et sur laquelle repose la platine 40 après sa mise en place sur ce corps creux 20.

Un joint d'étanchéité 50 en mousse (représenté en traits interrompus sur la figure 1) est avantageusement rapporté par collage le long de la face interne de la collerette périphérique 24 de la cuvette 21.

Le corps creux 20 comporte également une extension 25 sensiblement plane et s'étendant dans le prolongement de la portion avant la collerette périphérique 24 de la cuvette 21 (c'est-à-dire à l'opposée de sa pointe).

Présentant un profil complémentaire de celui du corps creux 20, la platine 40 est prévue pour être rapportée fixement contre la collerette 24 et l'extension 25 du corps 20 après la mise en place des haut-parleurs 5, 6

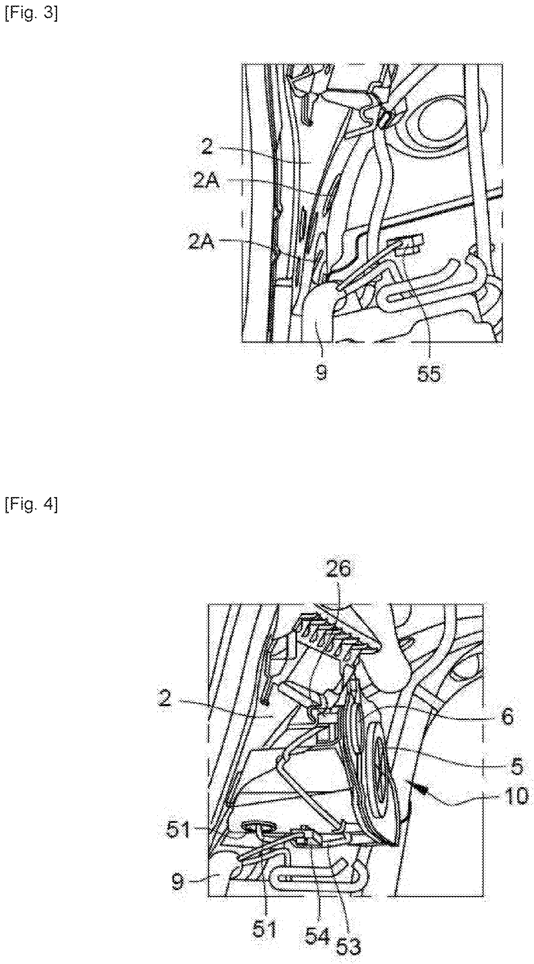

Afin de permettre la fixation de cette platine 40, le corps creux 20 comporte trois fûts de vissage 26 (seul l'un d'entre eux étant visible sur les figures 2 et 4) ménagés pour l'un sur la collerette 24 à proximité de la pointe de la cuvette 21 et pour les deux autres dans la partie inférieure de l'extension 25. L'ouverture débouchante de chacun de ces fûts 26 est en outre prévue pour venir se superposer avec un orifice circulaire correspondant ménagé dans la platine 40 afin de permettre l'insertion d'une vis (ces orifices n'étant pas visibles sur les figures).

Le corps creux 20 comprend également deux pattes de clipsage 27 (visibles sur la figure 1) agencées sur la portion supérieure de la collerette 24 et destinées à coopérer par encliquetage avec deux fentes correspondantes ménagées dans la platine 40.

La platine de couverture 40 présente une première ouverture circulaire d'accueil 42 pour le premier haut-parleur 5. Cette première ouverture 42 est agencée de sorte à déboucher dans la cuvette 21 après la mise en place de la platine 40 sur le corps creux 20.

La cuvette 21 et la platine de couverture 40 délimitent ainsi une chambre acoustique de résonnance dédiée à ce premier haut-parleur 5 et dont le volume est avantageusement supérieur ou égal à 0,8 litre de sorte à obtenir une restitution sonore optimale.

La présence du joint 50 le long de la collerette 24 de la cuvette 21 permet d'assurer l'étanchéité acoustique de cette chambre de résonnance après la mise en place de la platine 40 sur le corps creux 20.

Afin de permettre la fixation par vissage de ce haut-parleur 5 au support 10, la platine 40 comprend trois fûts de vissage (non visibles sur les figures) s'étendant perpendiculairement à son plan moyen en direction de la paroi de fond 22 de la cuvette 21, en étant angulairement répartis de manière sensiblement régulière autour de cette première ouverture 42 (chaque fût étant ainsi espacé des deux autres d'un secteur angulaire d'environ 120°).

La platine 40 présente également dans sa partie avant, prévue pour reposer contre l'extension 25 du corps creux 20, une seconde ouverture circulaire d'accueil 43 pour le second haut-parleur 6 de type tweeter (cette seconde ouverture étant d'un diamètre inférieur à la première).

Tel qu'illustré par la figure 2, un manchon annulaire 44 s'étend en outre perpendiculairement au plan moyen de cette platine et du côté externe depuis le contour de cette seconde ouverture 43.

Afin de permettre la fixation par clippage de ce haut-parleur 6 au support 10, plusieurs pattes d'encliquetage 45 sont ménagées dans ce manchon annulaire 44 en étant angulairement répartis de manière sensiblement régulière autour de cette ouverture 43, ces pattes 45 étant destinées à coopérer par encliquetage avec des moyens complémentaires prévus sur ce second haut-parleur 6.

Afin de permettre le passage du manchon 44 et du second haut-parleur 6, on peut également remarquer sur cette figure 2 que l'extension 25 du corps creux 20 présente une troisième ouverture 28 d'un diamètre légèrement supérieure à celui de l'ouverture 43 et agencée de sorte à venir en superposition avec l'ouverture 43 après la mise en place de la platine 40 sur le corps creux 20.

La platine 40 présente également, dans sa partie avant destinée à reposer contre l'extension 25 du corps creux 20, une première fenêtre rectangulaire 46 ménagée au dessus de la seconde ouverture 43 et agencée de manière à se superposer avec une seconde fenêtre rectangulaire 29 pratiquée dans cette extension 25, de sorte à permettre la fixation d'une garniture de custode sur le support 10 par l'intermédiaire d'une agrafe venant s'introduire successivement au travers de ces deux fenêtres superposées 46 et 29 avant de coopérer par encliquetage avec deux languettes 30 saillant du côté interne depuis deux bords opposés de la fenêtre 29.

Tel qu'illustré sur la figure 2, l'enveloppe latérale 23 du corps 21 présente un orifice oblong 31 sur lequel est monté un passe-gaine 51 en élastomère (représenté uniquement sur la figure 4) destiné à être traversé de manière étanche par le câble électrique d'alimentation 52 du premier haut-parleur 5.

Les extrémités des câbles électriques d'alimentation 52, 53 des deux haut-parleurs 5, 6 sont reliées à un même connecteur 54 venant se brancher sur un second connecteur 55 relié au faisceau électrique d'alimentation 9 cheminant le long de la doublure de custode 2 en dessous de la zone d'implantation du support 10 (voir figures 1 et 4).

En référence aux figures 1 et 2, le corps creux 20 comporte également un jambage 32 s'étendant sensiblement transversalement du côté externe depuis le bord inférieur de l'extension 25 et se terminant par un pied 33 destiné à reposer contre la face interne de la doublure de custode 2.

Ce corps creux 20 comprend également de manière avantageuse une pluralité d'organes de bridage 34 agencés respectivement la portion inférieure de la collerette 24, sur la face extérieure de l'enveloppe latérale 23 de la cuvette 21 et sur le jambage 32, et permettant d'assurer le guidage et le maintien des deux câbles électriques d'alimentation 52, 53 des deux haut-parleurs 5, 6 le long du support 10 tel qu'illustré sur la figure 1.

Un organe de support 35 pour le second connecteur 55 est par ailleurs agencé sur la face extérieure de l'enveloppe latérale 23 de la cuvette 21, à proximité du passe-gaine 51.

Par ailleurs, le corps creux 20 comporte des moyens de fixation permettant de solidariser le sous-ensemble constitué par le support 10 et les haut-parleurs 5, 6 à la doublure de custode 2.

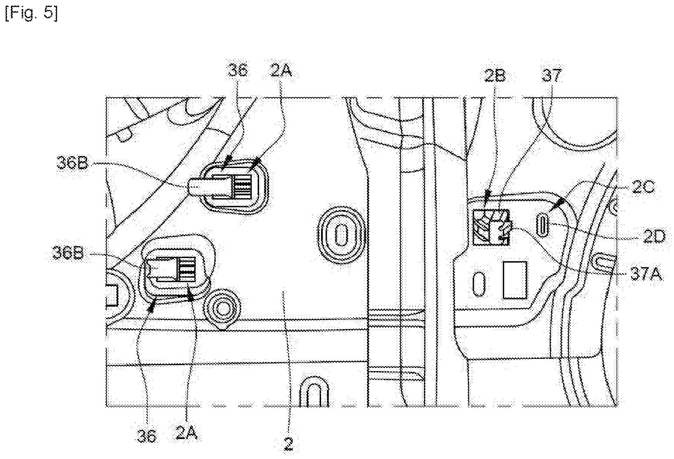

En référence à la figure 2, ces moyens de fixation comportent deux crochets 36 s'étendant depuis la face externe de la portion avant de la paroi de fond 22 (respectivement, au niveau de sa pointe arrière et de son bord supérieur) et destinés à coopérer par empiochage avec deux orifices rectangulaires respectifs 2A ménagés dans la partie arrière de la doublure de custode 2 (ces orifices 2A étant visibles sur les figures 3 et 5).

Présentant un profil en forme de L, chaque crochet 36 comprend une embase 36A saillant transversalement depuis la face externe de la portion avant de la paroi de fond 22, ainsi qu'une jambe 36B s'étendant longitudinalement vers l'arrière depuis l'extrémité de l'embase 36A opposée à cette paroi de fond 22 et destinée à venir reposer en appui contre la face externe de la doublure de custode 2 sur le pourtour d'un orifice correspondant 2A tel qu'illustré sur la figure 5.

Ces moyens de fixation comprennent également un dôme de clippage 37 saillant transversalement du côté externe depuis le pied 33 du corps creux 20, et comprenant une dent 37A apte à coopérer par encliquetage avec un trou 2B ménagé dans la partie avant de la doublure de custode 2 tel qu'illustré également sur cette figure 5.

De manière avantageuse, les moyens de fixation comportent enfin un orifice circulaire de vissage 38 ménagé dans le pied 33 à proximité de l'organe de clippage 37 et agencé pour se superposer avec un orifice correspondant 2C ménagé dans la partie avant de la doublure de custode 2 et sur le pourtour externe duquel est soudée une molaire 2D : la fixation par vissage étant réalisée en boulonnant une vis 60, introduite préalablement au travers des orifices 38 et 2C, à l'intérieur de cette molaire 2D.

On va maintenant décrire rapidement les opérations de montage du support 10 portant les haut-parleurs 5 et 6 (ces derniers ayant été préalablement mis en place) sur la doublure de custode 2 du véhicule à l'appui des figures 3 à 5.

Après avoir agrippé ce support 10 avec l'une de ses mains, l'opérateur doit tout d'abord glisser sa tête au travers de l'ouverture latérale arrière de portière 4 de sorte à visualiser le positionnement des deux orifices d'empiochage 2A (figure 3).

Il doit ensuite introduire ce support 10 au travers de cette ouverture 4, puis le positionner contre la doublure de custode 2 légèrement de biais de sorte que sa partie avant demeure légèrement écartée transversalement de cette doublure de custode 2 afin de permettre à l'opérateur de visualiser les crochets 36 et les orifices 2A.

L'opérateur doit alors faire translater longitudinalement ce support 10 vers l'arrière de manière à ce que les jambes 36B des crochets 36 viennent s'insérer dans les deux orifices 2A et jusqu'à ce que leurs pieds 36A arrivent en butée contre les bords arrière de ces orifices 2A.

Cette opération d'empiochage selon une direction longitudinale permet en outre d'éviter tout risque de pincement du tuyau souple 8 ou du faisceau d'alimentation 9 se trouvant dans la zone de montage (ces derniers étant éventuellement légèrement poussés vers l'arrière du véhicule).

Il ne lui reste alors plus qu'à rabattre transversalement la partie avant de ce support 10 contre la doublure de custode 2 de sorte à provoquer l'encliquetage du dôme de clippage 37 dans le trou 2B.

Le support 10 est dès lors maintenu fixement sur la doublure de custode 2. L'opérateur peut donc le relâcher de sorte à bénéficier de ses deux mains pour réaliser le vissage de la vis 60, introduite préalablement au travers des orifices 38 et 2C, à l'intérieur de la molaire 2D, afin d'assurer une meilleure tenue de ce support 10 en évitant tout risque de déclipsage du dôme 37 en cas de choc latéral ou du fait des vibrations.

Selon des variantes de réalisation non représentés, le support peut être configuré différemment.

Le corps 20 peut par exemple être dépourvu de l'extension 25 comprenant les moyens d'accueil du second haut-parleur 6 (la partie correspondante de la platine 40 étant alors également absente).

Le support peut également être constitué en monobloc (ce dernier étant alors dépourvu de chambre acoustique de résonnance). :

## Revendications

1. Ensemble comportant un support (10) pour au moins un haut-parleur latéral arrière de véhicule automobile et une doublure latérale de custode (2) dudit véhicule, ledit support (10) étant monté fixement contre la face interne de la doublure latérale de custode (2), ledit support (10) comportant des moyens d'accueil pour au moins un dit haut-parleur (5, 6) ainsi que des moyens de fixation à ladite doublure latérale de custode (2) ;
**caractérisé en ce que** lesdits moyens de fixation comportent au moins un crochet (36) ménagé dans la partie arrière dudit support (10) et adaptés pour coopérer par empiochage avec un orifice respectif (2A) ménagé dans ladite doublure de custode (2), l'empiochage se faisant selon une direction longitudinale du véhicule lorsque ledit ensemble est positionné dans ledit véhicule, ainsi qu'au moins un organe de clippage (37) ménagé dans la partie avant dudit support (10) et adapté pour coopérer par encliquetage avec un trou (2B) ménagé dans ladite doublure de custode (2), l'encliquetage se faisant selon une direction transversale du véhicule lorsque ledit ensemble est positionné dans ledit véhicule

2. Ensemble selon la revendication 1, **caractérisé en ce que** le support (10) comporte un corps creux (20) formant une cuvette (21) ainsi qu'une platine (40) prévue pour être rapportée fixement sur ledit corps creux (20) de sorte à fermer ladite cuvette (21) pour former une chambre acoustique de résonnance, ladite platine (40) présentant une première ouverture d'accueil (42) pour un premier dit haut-parleur (5), cette première ouverture (42) étant agencée de sorte à déboucher dans ladite cuvette (21) après la mise en place de ladite platine (40) sur ledit corps creux (20).

3. Ensemble selon la revendication 2, **caractérisé en ce que** ladite cuvette (21) est délimitée par une paroi de fond (22) destinée à reposer contre la face interne de la doublure de custode (2), une enveloppe latérale (23) d'axe sensiblement transversal, ainsi qu'une collerette périphérique (24) saillant radialement vers l'extérieur depuis le bord de l'enveloppe (23) opposé à la paroi de fond (22) et sur laquelle repose ladite platine (40) après sa mise en place sur ledit corps creux (20).

4. Ensemble selon la revendication 3, **caractérisé en ce que** lesdits moyens de fixation comportent deux dits crochets (36) s'étendant depuis la paroi de fond (22) de ladite cuvette (21), chaque dit crochet (36) comprenant une embase (36A) saillant transversalement depuis la face externe de la portion avant de ladite paroi de fond (22), ainsi qu'une jambe (36B) s'étendant longitudinalement vers l'arrière depuis l'extrémité de ladite embase (36A) opposée à cette paroi de fond (22) et destinée à venir reposer en appui contre la face externe de ladite doublure de custode (2) sur le pourtour d'un dit orifice correspondant (2A).

5. Ensemble selon l'une des revendications 3 ou 4, **caractérisé en ce que** ladite enveloppe latérale (23) présente un orifice (31) sur lequel est monté un passe-gaine en élastomère (51) destiné à être traversé de manière étanche par le câble électrique d'alimentation (52) dudit premier haut-parleur (5).

6. Ensemble selon l'une des revendications 3 à 5, **caractérisé en ce que** le support (10) comporte un joint d'étanchéité (50) rapporté par collage le long de la face interne de ladite collerette périphérique (24) de la cuvette (21), de sorte à assurer l'étanchéité acoustique de ladite chambre de résonnance après la mise en place de ladite platine (40) sur ledit corps creux (20).

7. Ensemble selon l'une des revendications 3 à 6, **caractérisé en ce que** ledit corps creux (20) comporte une extension sensiblement plane (25) et s'étendant dans le prolongement d'une portion de la collerette périphérique (24) de la cuvette (21), ladite platine (40) comprenant également une partie destinée à recouvrir ladite extension (25) et présentant une seconde ouverture d'accueil (43) pour un second haut-parleur de type tweeter (6), cette seconde ouverture (43) étant agencée de sorte à venir en superposition avec une troisième ouverture (28) pratiquée dans ladite extension (25) après la mise en place de ladite platine (40) sur ledit corps creux (20).

8. Ensemble selon la revendication 7, **caractérisé en ce que** ledit corps creux (20) comporte un jambage (32) s'étendant sensiblement transversalement du côté externe depuis le bord inférieur de ladite extension (25) et se terminant par un pied (33) destiné à reposer contre la face interne de ladite doublure de custode (2) et sur lequel est ménagé ledit au moins un organe de clippage (37).

9. Ensemble selon la revendication 8, **caractérisé en ce que** lesdits moyens de fixation comportent également un orifice de vissage (38) ménagé dans ledit pied (33) et agencé pour se superposer avec un orifice correspondant (2C) ménagé dans ladite doublure de custode (2).

10. Ensemble selon l'une des revendications 7 à 9, **caractérisé en ce que** ladite platine (40) présente, dans sa partie destinée à reposer contre ladite extension (25) du corps creux (20), une première fenêtre (46) agencée de manière à se superposer avec une seconde fenêtre (29) pratiquée dans cette extension (25) après la mise en place de ladite platine (40) sur ledit corps creux (20), de sorte à permettre la fixation par encliquetage d'une garniture de custode sur le support (10).

## Patentansprüche

1. Anordnung mit einer Halterung (10) für mindestens einen hinteren seitlichen Lautsprecher eines Kraftfahrzeugs und einer seitlichen Custodauskleidung (2) des Fahrzeugs, wobei die Halterung (10) fest an der Innenseite der seitlichen Custodauskleidung (2) angebracht ist, wobei die Halterung (10) Aufnahmeeinrichtungen für mindestens einen der Lautsprecher (5, 6) sowie Befestigungseinrichtungen an der seitlichen Custodauskleidung (2) aufweist;
**dadurch gekennzeichnet, dass** die Befestigungsmittel mindestens einen Haken (36) umfassen, der im hinteren Teil des Trägers (10) ausgebildet ist und angepasst ist, um durch Einrasten mit einer entsprechenden Öffnung (2A) zusammenzuwirken, die in der Custode-Auskleidung (2) ausgebildet ist, wobei das Einrasten in einer Längsrichtung des Fahrzeugs erfolgt, wenn die Einheit in dem Fahrzeug angeordnet ist, sowie mindestens ein Einrastorgan (37), das im vorderen Teil des Trägers (10) ausgebildet ist und angepasst ist, um durch Einrasten mit einer Öffnung (2B) zusammenzuwirken, die in der Custode-Auskleidung (2) ausgebildet ist Einrasten in einer Querrichtung des Fahrzeugs, wenn die Baugruppe in dem Fahrzeug angeordnet ist

2. Anordnung nach Anspruch 1, **dadurch gekennzeichnet, dass** der Träger (10) einen hohlen Körper (20) aufweist, der eine Schale (21) bildet, sowie eine Platte (40), die so angeordnet ist, dass sie fest auf dem hohlen Körper (20) angebracht werden kann, um die Schale (21) zu schließen, um eine akustische Resonanzkammer zu bilden, wobei die Platte (40) eine erste Aufnahmeöffnung (42) für einen ersten Lautsprecher (5) aufweist, wobei diese erste Öffnung (42) so angeordnet ist, dass sie nach dem Einsetzen in die Schale (21) mündet Die Platine (40) auf dem Hohlkörper (20).

3. Anordnung nach Anspruch 2, **dadurch gekennzeichnet, dass** die Vertiefung (21) durch eine Bodenwand (22) begrenzt ist, die dazu bestimmt ist, gegen die Innenfläche der Custodauskleidung (2) zu ruhen, eine seitliche Umhüllung (23) mit im Wesentlichen querverlaufender Achse sowie einen Umfangsflansch (24), der von dem der Bodenwand (22) gegenüberliegenden Rand der Umhüllung (23) radial nach außen vorsteht und auf dem die Platine (40) nach ihrer Anordnung auf dem Hohlkörper (20) ruht.

4. Anordnung nach Anspruch 3, **dadurch gekennzeichnet, dass** die Befestigungsmittel zwei Haken (36) umfassen, die sich von der Bodenwand (22) der Schale (21) erstrecken, wobei jeder Haken (36) einen Sockel (36A) umfasst, der quer von der Außenfläche des vorderen Abschnitts der Bodenwand (22) vorsteht, sowie einen Schenkel (36B), der sich in Längsrichtung nach hinten von dem Ende des Sockels (36A) erstreckt, das dieser Bodenwand (22) gegenüberliegt und dazu bestimmt ist, in Anlage an der Außenfläche zu kommen der Custode-Auskleidung (2) auf dem Umfang einer entsprechenden Öffnung (2A).

5. Anordnung nach einem der Ansprüche 3 oder 4, **dadurch gekennzeichnet, dass** die seitliche Umhüllung (23) eine Öffnung (31) aufweist, an der ein elastomerer Manteldurchlass (51) angebracht ist, der dazu bestimmt ist, vom elektrischen Versorgungskabel (52) des ersten Lautsprechers (5) dicht durchquert zu werden.

6. Anordnung nach einem der Ansprüche 3 bis 5, **dadurch gekennzeichnet, dass** der Träger (10) eine Dichtung (50) aufweist, die durch Kleben entlang der Innenfläche des Umfangsflansches (24) der Schale (21) angebracht ist, sodass die akustische Abdichtung der Resonanzkammer nach dem Anbringen der Platine (40) an dem Hohlkörper (20) gewährleistet ist.

7. Anordnung nach einem der Ansprüche 3 bis 6, **dadurch gekennzeichnet, dass** der Hohlkörper (20) eine im Wesentlichen ebene Verlängerung (25) aufweist, die sich in die Verlängerung eines Abschnitts des Umfangsflansches (24) der Schale (21) erstreckt, wobei die Platine (40) auch einen Abschnitt aufweist, der dazu bestimmt ist, die Verlängerung (25) abzudecken, und eine zweite Aufnahmeöffnung (43) für einen zweiten Lautsprecher vom Tweettyp (6) aufweist, wobei diese zweite Öffnung (43) so angeordnet ist, dass sie eine dritte Öffnung (28) überlagert, die in ihr ausgebildet ist Die Verlängerung (25) erfolgt nach dem Aufsetzen der Platine (40) auf den Hohlkörper (20).

8. Anordnung nach Anspruch 7, **dadurch gekennzeichnet, dass** der Hohlkörper (20) einen Schenkel (32) aufweist, der sich im Wesentlichen quer zur Außenseite von der Unterkante des Vorsprungs (25) erstreckt und in einem Fuß (33) endet, der dazu bestimmt ist, an der Innenfläche der Custode-Auskleidung (2) anzuliegen, und an dem das mindestens eine Klemmelement (37) angebracht ist.

9. Anordnung nach Anspruch 8, **dadurch gekennzeichnet, dass** die Befestigungsmittel auch eine Schrauböffnung (38) aufweisen, die in dem Fuß (33) ausgebildet ist und so angeordnet ist, dass sie sich mit einer entsprechenden Öffnung (2C) überlagert, die in der Custodauskleidung (2) ausgebildet ist.

10. Anordnung nach einem der Ansprüche 7 bis 9, **dadurch gekennzeichnet, dass** die Platte (40) in ihrem Teil, der dazu bestimmt ist, an der Verlängerung (25) des Hohlkörpers (20) anzuliegen, ein erstes Fenster (46) aufweist, das so angeordnet ist, dass es sich mit einem zweiten Fenster (29) überlagert, das in dieser Verlängerung (25) nach dem Anbringen der Platte (40) an dem Hohlkörper (20) ausgebildet ist, sodass die Schnappbefestigung einer Custode-Dichtung an dem Träger (10) ermöglicht wird.

## Claims

1. Assembly comprising a support (10) for at least one rear side loudspeaker of a motor vehicle and a rear side liner (2) of said vehicle, said support (10) being mounted fixedly against the inner face of the rear side liner (2), said support (10) comprising reception means for at least one said loudspeaker (5, 6) as well as means of attachment to said rear side liner (2);
**characterized in that** said fastening means comprise at least one hook (36) formed in the rear part of said support (10) and adapted to cooperate by stacking with a respective orifice (2A) formed in said rear quarter lining (2), the stacking being done in a longitudinal direction of the vehicle when said assembly is positioned in said vehicle, and at least one clipping member (37) formed in the front part of said support (10) and adapted to cooperate by snapping with a hole (2B) formed in said rear quarter lining (2), the snapping being done along transverse direction of the vehicle when said assembly is positioned in said vehicle

2. Assembly according to claim 1, **characterized in that** the support (10) comprises a hollow body (20) forming a bowl (21) and a plate (40) designed to be attached fixedly to the said hollow body (20) so as to close the said bowl (21) in order to form an acoustic resonance chamber, the said plate (40) having a first reception opening (42) for a first said loudspeaker (5), this first opening (42) being arranged so as to open into the said bowl (21) after the positioning of the said plate (40) on said hollow body (20).

3. Assembly according to claim 2, **characterized in that** the said bowl (21) is delimited by a bottom wall (22) intended to rest against the inner face of the quarter-piece lining (2), a lateral envelope (23) with a substantially transverse axis, and a peripheral collar (24) projecting radially outwards from the edge of the envelope (23) opposite the bottom wall (22) and on which the said plate (40) rests after it has been put into place on the said hollow body (20).

4. Assembly according to claim 3, **characterized in that** the said fixing means comprise two said hooks (36) extending from the bottom wall (22) of the said bowl (21), each said hook (36) comprising a base (36A) projecting transversely from the outer face of the front portion of the said bottom wall (22), and a leg (36B) extending longitudinally rearwards from the end of the said base (36A) opposite this bottom wall (22) and intended to bear against the outer face of the said base quarter-end lining (2) on the periphery of a corresponding orifice (2A).

5. Assembly according to either of claims 3 and 4, **characterized in that** the said lateral casing (23) has an orifice (31) on which is mounted an elastomer sheath-pass (51) intended to be traversed in a sealed manner by the electric power cable (52) of the said first loudspeaker (5).

6. Assembly according to one of claims 3 to 5, **characterized in that** the support (10) comprises a sealing joint (50) attached by adhesive bonding along the internal face of the said peripheral collar (24) of the bowl (21), so as to ensure the acoustic tightness of the said resonant chamber after the positioning of the said plate (40) on the said hollow body (20).

7. Assembly according to one of claims 3 to 6, **characterized in that** the said hollow body (20) comprises a substantially flat extension (25) and extending in the extension of a portion of the peripheral collar (24) of the bowl (21), the said plate (40) also comprising a part intended to cover the said extension (25) and having a second reception opening (43) for a second tweeter-type loudspeaker (6), this second opening (43) being arranged so as to be superposed with a third opening (28) made in the said extension (6) 25) after said plate (40) has been put into place on said hollow body (20).

8. Assembly according to claim 7, **characterized in that** the said hollow body (20) comprises a leg (32) extending substantially transversely on the external side from the lower edge of the said extension (25) and terminating in a foot (33) intended to rest against the internal face of the said quarter-piece lining (2) and on which the said at least one clipping member (37) is provided.

9. Assembly according to claim 8, **characterized in that** the said fixing means also comprise a screwing orifice (38) formed in the said foot (33) and arranged to be superposed with a corresponding orifice (2C) formed in the said rear-end lining (2).

10. Assembly according to one of claims 7 to 9, **characterized in that** the said plate (40) has, in its part intended to rest against the said extension (25) of the hollow body (20), a first window (46) arranged in such a way as to be superposed with a second window (29) made in this extension (25) after the positioning of the said plate (40) on the said hollow body (20), so as to allow the fastening, by snap-fastening, of a quarter-piece liner on the support (10).]
